# EUROPEAN PATENT APPLICATION

(11) **EP 4 717 806 A1**
(43) Date of publication of application: **01.04.2026**
(21) Application number: 25199234.3
(22) Date of filing: 30.08.2025
(51) Int. Cl.: D02G 3/34, D03D 15/547, D02G 3/44

(54) **FABRIC WITH LIGHT-REFLECTIVE YARN**

(30) Priority: 04.09.2024 TW 113133557
(71) Applicant: Chance Line Industrial Co., Ltd., Siansi Township, Changhua County (TW)
(72) Inventor: YAO, Ming-Hsien, Siansi Township (TW)
(74) Representative: Lermer, Christoph

(57) **Abstract**

A fabric with light-reflective yarn comprises one or more non-light-reflective yarns incapable of reflecting light; one or more light-reflective yarns bonded to the fabric by weaving, sewing, machine sewing, embroidery, or jacquard, and exposed on at least one surface of the fabric; the light-reflective yarn has a color, a color of the light-reflective yarn is the same as, different from, or contrasting with a color of the fabric. When a color of the light-reflective yarn is the same as a color of the fabric, it is difficult to distinguish the light-reflective yarn from the fabric, enabling the light-reflective yarn to be hidden in the fabric. When a color of the light-reflective yarn is different from or contrasts with a color of the fabric, the light-reflective yarn stands out from the fabric. When a colored pattern on the fabric is formed by the light-reflective yarn and the non-light-reflective yarn of a same color, and a color of the pattern is different from a color of the fabric, the light-reflective yarn remains hidden in the fabric.

## Description

### FIELD OF THE INVENTION

The invention relates to fabrics, more particularly to a fabric with one or more light-reflective yarns, the light-reflective yarn is hidden in the fabric or is in contrast with the fabric in color.

### DESCRIPTION OF THE RELATED ART

The inventor has been committed to improving the safety of people's activities at night or in dimly lit areas, and has invented patent application No. EP21191044.3. The invention incorporates light-reflective yarns onto a fabric, creating a safety fabric that imparts light-reflective properties to clothing for people to wear.

Integrating the light-reflective yarns onto the fabric can indeed achieve the safety the inventor envisioned.

The light-reflective yarn has micro glass beads and includes an aluminum covering layer. Therefore, the appearance of the conventional light-reflective yarn is silver. In addition to silver, the conventional light-reflective yarn does not have any other colors. However, clothing has a variety of colors, so a color of the conventional light-reflective yarn differs from a color of clothing, making it easy to distinguish the conventional light-reflective yarn from clothing.

Furthermore, in terms of chromatology, some clothing designs contrast a specific pattern on the clothing with the clothing's own color to highlight the specific pattern. However, conventional light-reflective yarns are only available in a single color, which cannot achieve the design requirement of a contrast between a color of the light-reflective yarn and a color of the clothing.

### SUMMARY OF THE INVENTION

The inventor sought to further improve applications of light-reflective yarns on fabrics and thus developed the invention. One object of the invention is to provide a fabric with light-reflective yarn that is concealed in the fabric, making it visible only when the light-reflective yarn reflects light.

An object of the invention is to provide a fabric with light-reflective yarn, the light-reflective yarn has a color that can be the same as, different from, or contrasting with a color of the fabric itself.

The invention provides a fabric with light-reflective yarn(s), comprising:
a fabric with one or more non-light-reflective yarns incapable of reflecting light, the fabric having at least one color; and
one or more light-reflective yarns bonded to the fabric by weaving, sewing, machine sewing, embroidery, or jacquard, and exposed on at least one surface of the fabric; the light-reflective yarn having any color other than silver, a color of the light-reflective yarn being the same as, different from, or contrasting with a color of the fabric.

Thereby, when the light-reflective yarn and the fabric have a same color and the light-reflective yarn does not reflect light, it is difficult to distinguish between the light-reflective yarn and the non-light-reflective yarn of the fabric, enabling the light-reflective yarn to be hidden in the fabric, the light-reflective yarn and the non-light-reflective yarn can only be distinguished when the light-reflective yarn reflects light.

When a color of the light-reflective yarn is different from or contrasting with a color of the non-light-reflective yarn of the fabric, the light-reflective yarn stands out from the fabric, in particular, when the light-reflective yarn forms a pattern on the at least one surface of the fabric, the pattern can further stand out from the fabric.

The invention provides another fabric with light-reflective yarn(s), comprising:
a fabric with one or more non-light-reflective yarn incapable of reflecting light, the fabric having at least one color; and
one or more light-reflective yarns bonded to the fabric by weaving, sewing, machine sewing, embroidery, or jacquard, and exposed on at least one surface of the fabric; the light-reflective yarn having a light-transmissive and colored covering layer made of a resin material, the covering layer covering the light-reflective yarn, the light-reflective yarn being provided with a color through the covering layer, a color of the light-reflective yarn being the same as, different from, or contrasting with a color of the fabric.

When a colored pattern on the fabric is formed by the light-reflective yarn and the non-light-reflective yarn of a same color, and a color of the colored pattern is different from a color of the fabric, the light-reflective yarn remains hidden in the fabric despite a color of the light-reflective yarn being different from a color of the fabric.

Preferably, the light-reflective yarn forms at least one pattern on the at least one surface of the fabric; when the light-reflective yarn reflects light, the pattern forms a light-reflective pattern.

Preferably, the pattern is formed by several the light-reflective yarns and several the non-light-reflective yarns, with one or more the non-light-reflective yarns provided between two of adjacent light-reflective yarns.

Preferably, the light-reflective yarn and the non-light-reflective yarn forming the pattern have a same color or different colors, making the pattern a single colored or a multi-colored pattern.

Preferably, the at least one surface of the fabric is formed with at least one pattern, the pattern is formed by the light-reflective yarn and the non-light-reflective yarn of a same color, and a color of the pattern is different from a color of the fabric.

Preferably, the covering layer is a resin containing silane.

Preferably, the resin of the covering layer is added with a transparent pigment.

Preferably, the light-reflective yarn comprises: a base layer having two surfaces; at least one layer of light-reflective elements disposed on at least one surface of the base layer; and the covering layer covering the base layer and the light-reflective elements.

Preferably, the light-reflective element is a micro glass bead, a surface of the micro glass bead is provided with a reflective layer.

### BRIEF DESCRIPTION OF DRAWINGS

The objects, features, and achieved efficacies of the invention can be understood from the description and drawings of the following preferred embodiments, in which:
FIG. 1 is a photo of a light-reflective yarn of the invention.
FIG. 2 is a transverse cross-sectional view of an implementation structure of the light-reflective yarn of the invention.
FIG. 3 is a transverse cross-sectional view of another implementation structure of the light-reflective yarn of the invention.
FIG. 4 is a cross-sectional view of a first preferred embodiment of a fabric of the invention.
FIG. 5 is a top view of a second preferred embodiment of the fabric of the invention.
FIG. 6 is a top view of a third preferred embodiment of the fabric of the invention.
FIG. 7 is a schematic diagram of a fourth preferred embodiment of the fabric of the invention.
FIGS. 8 and 9 show photos of an application example of the fabric of the invention.
FIGS. 10 and 11 show photos of an application example of the fabric of the invention.
FIGS. 12 and 13 show photos of the fabric of the invention incorporated into an article.
FIG. 14 is a top view of a fifth preferred embodiment of the fabric of the invention.
FIGS. 15 to 17 are photos of another application example of the fabric of the invention.
FIGS. 18 and 19 are photos of another application example of the fabric of the invention.
FIG. 20 shows a photo of four fabrics of the invention.
FIG. 21 shows a photo of backs of fabrics of the invention.

### DETAILED DESCRIPTION OF THE INVENTION

The invention relates to a fabric with one or more light-reflective yarns. The fabric is a fabric woven with fibers or yarns, and also includes non-woven fabric, such as non-woven cloth. The fabric of the invention comprises one or more light-reflective yarns and one or more non-light-reflective yarns. The light-reflective yarn refers to various yarns, fibers, and silks that can be used for weaving or non-weaving other than light-reflective yarns. The term "yarn" used in this specification refers to yarn, thread, fiber, and silk etc.

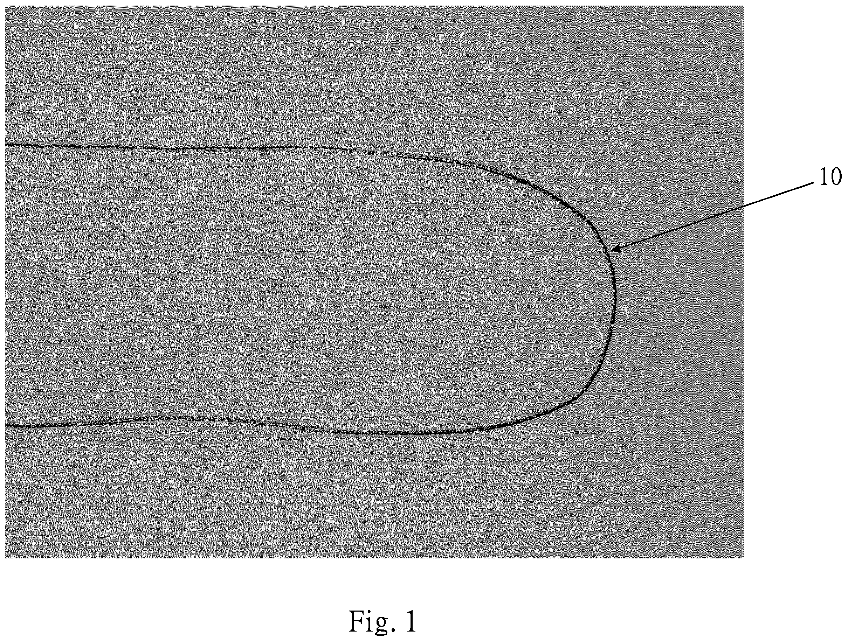

Please refer to FIG. 1 for a photo (presented in black and white in this specification) of a light-reflective yarn 10 used in the invention. The light-reflective yarn 10 is a thread with a fine diameter. A diameter (width) of the light-reflective yarn 10 is between 0.15 mm and 1 mm, preferably less than 0.5 mm, between 0.2 mm and 0.5 mm, and particularly between 0.25 mm and 0.38 mm. More preferably, the diameter is between 0.20 mm and 0.35 mm. An appearance of the light-reflective yarn 10 has a color and the light-reflective yarn 10 becomes a colored light-reflective yarn. The light-reflective yarn 10 can be used as a weaving thread, sewing thread, machine sewing thread, embroidery thread of the fabric, so that the light-reflective yarn 10 can be used for weaving, sewing, machine sewing, electric embroidery and jacquard.

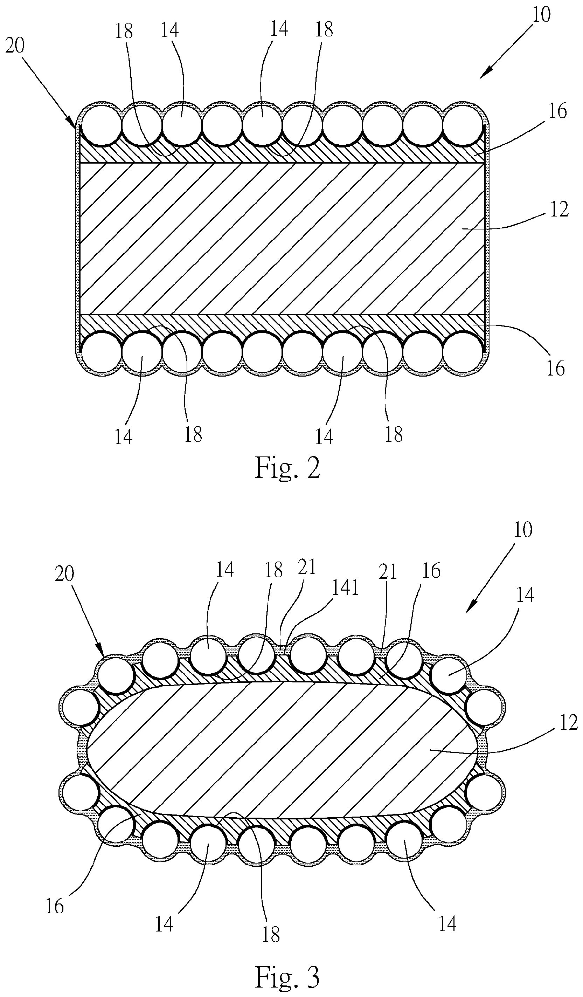

FIG. 2 shows a cross-sectional view of an implementation structure of the light-reflective yarn 10 of the invention. The light-reflective yarn 10 comprises: a base layer 12 having two surfaces located on opposite sides, such as a top surface and a bottom surface shown in FIG. 2; a plurality of micro glass beads 14 serving as light-reflective elements, adhered to the two surfaces of the base layer 12 by two adhesive layers 16, forming two layers of micro glass beads, with outer surfaces of the micro glass beads 14 exposed from the adhesive layers 16; two reflective layers 18 disposed on inner surfaces of the two layers of the micro glass beads 14; and a covering layer 20 covering an outer periphery of the light-reflective yarn 10, covering a top, a bottom, and two side surfaces of the light-reflective yarn 10, and encapsulating the micro glass beads 14. The covering layer 20 is made of a light-transmissive resin and can be made in any color, such as, but not limited to, black, red, blue, white, yellow, green, orange, brown, gray, purple, and silver. The covering layer 20 can be made in a light or dark color. The covering layer 20 is an outermost layer of the light-reflective yarn 10, and a color of the covering layer 20 becomes a color of the light-reflective yarn 10.

The base layer 12 can be made of an elastic or inelastic high molecular polymer. Elastic polymer includes, but is not limited to, thermoplastic polyurethane (TPU), polyurethane (PU), thermoplastic elastomer (TPE), thermoplastic rubber (TPR), or silicone; inelastic polymer includes, but is not limited to, polyester, polyethylene terephthalate (PET), rigid polyvinyl chloride (PVC), oriented polypropylene (OPP), or nylon. The base layer 12 can also be made of cloth rather than polymer.

The adhesive layer 16 is made of a resin adhesive. Any resin that can function as an adhesive can be used as a material for the adhesive layer 16. Preferably, the adhesive layer 16 is a polyurethane adhesive or an acrylic adhesive.

The reflective layer 18 is made of, but not limited to, a metallic material such as aluminum or silver. The reflective layer 18 made of aluminum or silver has high reflectivity and is capable of providing high lumens of reflected light. The reflective layer 18 can also be made of other materials, such as zinc sulfide.

The covering layer 20 can be made of a resin containing acrylic acid and silane, a resin containing thermoplastic polyurethane and silane, or a resin mixed with acrylic acid, silane and thermoplastic polyurethane. The covering layer 20 has excellent bonding properties with both the adhesive layer 16 and the micro glass beads 14. The micro glass beads 14 are adhered to the adhesive layer 16 and covered by the covering layer 20, making the micro glass beads 14 less likely to detach from the light-reflective yarn 10.

Resin components of the covering layer 20 include: a pigment (such as transparent ink), an additive (i.e., silane), a bridging agent (curing agent), TPU resin, and an organic solvent (VOC). Alternatively, other resin components of the covering layer 20 include: a pigment, an additive (i.e., silane), a bridging agent, an acrylic resin, and an organic solvent.

Resin components of the covering layer 20 include silane and a pigment. The pigment is a highly transparent dye or colorant. The highly transparent pigment has a low light-shielding rate and does not block light from passing through the covering layer 20. The silane can be oil-based or water-based; the transparent pigment is a highly transparent ink, which can be water-based or oil-based. The light-reflective yarn 10 with the covering layer 20 of the invention has a light-reflective value of up to 200-400 lumens.

FIG. 3 shows a cross-sectional view of another implementation structure of the light-reflective yarn 10 of the invention. Its structure is similar to that of the light-reflective yarn 10 in FIG. 2, comprising a base layer 12, two layers of micro glass beads formed by micro glass beads 14, two adhesive layers 16, two reflective layers 18, and a covering layer 20. The micro glass beads 14 are adhered to the two surfaces of the base layer 12 by the two adhesive layers 16. The covering layer 20 is an outermost layer of the light-reflective yarn 10, covering the entire light-reflective yarn 10. In the light-reflective yarn 10 of FIG. 3, a gap 141 is provided between two adjacent micro glass beads 14. The covering layer 20 has a greater thickness 21 at the gap 141, so more ink of the covering layer 20 is accumulated at the gap 141, making a color of the light-reflective yarn 10 purer and brighter.

The light-reflective yarn 10 of the invention can be used as a weaving thread to be woven with the non-light-reflective yarn to form the fabric, or the light-reflective yarn 10 can be used with the non-light-reflective yarn to make the fabric, such as a non-woven cloth, in a non-woven manner. The light-reflective yarn 10 can also be used as a sewing thread or embroidery thread to be bonded with the fabric by sewing (hand-sewing), machine sewing, electric embroidery, or jacquard.

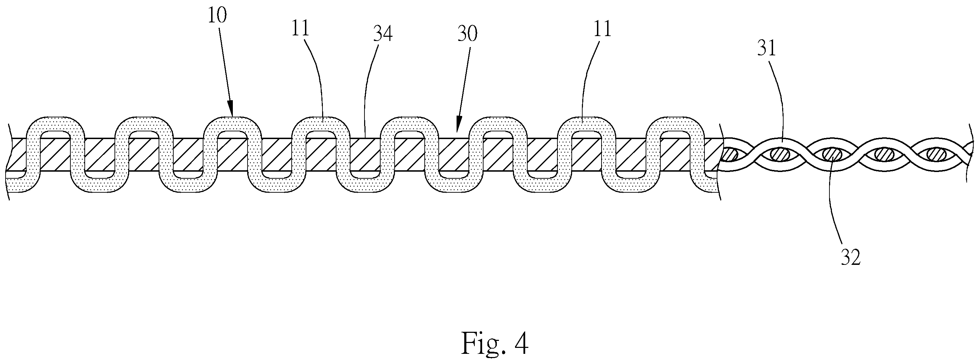

Please refer to FIG. 4 for a cross-sectional view of a first preferred embodiment of a fabric 30 of the invention. In this embodiment, the fabric 30 is a cloth woven from non-light-reflective yarns 31 in the warp direction and non-light-reflective yarns 32 in the weft direction and can be single-colored or multi-colored. Each of the fabrics (30, 30A to 30N) disclosed in various embodiments of the invention can be a cloth respectively made of various yarns. The light-reflective yarn 10 or the light-reflective yarns 10, serving as sewing or embroidery threads, is or are bonded to the fabric 30 by sewing (hand-sewing), machine sewing, or electric embroidery. Each of the light-reflective yarns 10 is threaded through the fabric 30 and has a segment 11 exposed on a front side 34 of the fabric 30. The light-reflective yarn 10 also has a segment exposed on a back side of the fabric 30. The light-reflective yarn 10 is made to have a single color, a color the same as a color of the fabric 30. Alternatively, a color of the light-reflective yarn 10 can be different from a color of the fabric 30, preferably a color of the light-reflective yarn 10 and a color of the fabric 30 contrasting with each other.

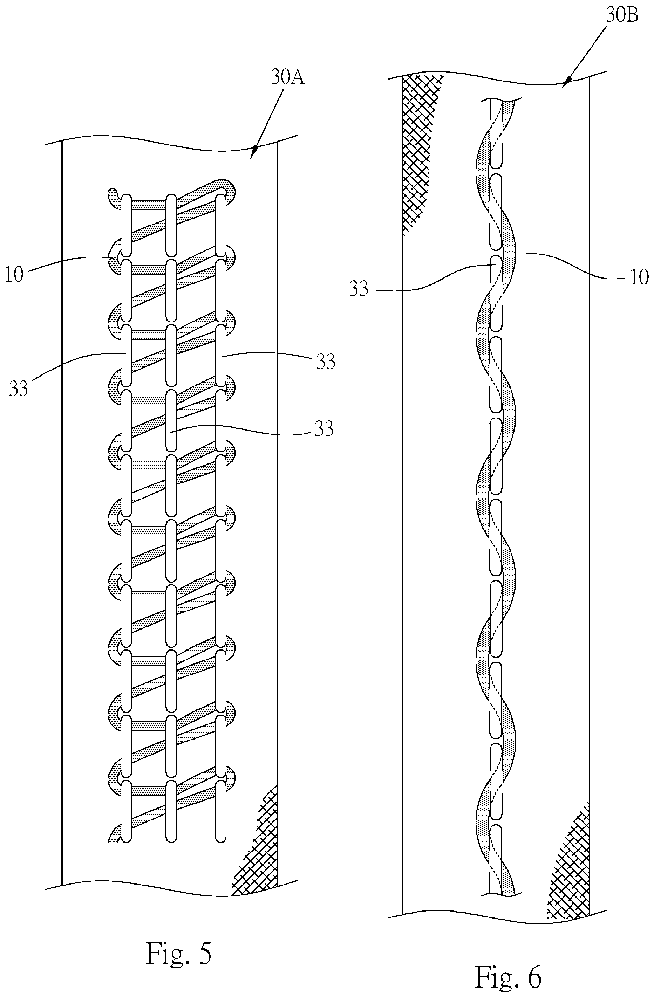

FIG. 5 is a top view of a fabric 30A of a second preferred embodiment of the invention. A plurality of non-light-reflective yarns (e.g., two to four) 33 and at least one light-reflective yarn 10 of the invention are sewn onto the fabric 30A. The light-reflective yarn 10 serves as a weaving thread, spans between the non-light-reflective yarns 33 and is pressed by the non-light-reflective yarns 33. In this sewing structure, the light-reflective yarn 10 is referred to as a "crossing thread" (or "climbing thread"), only disposed on a front surface (one surface) of the fabric 30A and does not penetrate the fabric 30A. A color of the light-reflective yarn 10 can be the same as or different from a color of the fabric 30A and the non-light-reflective yarn 33.

FIG. 6 is a top view of a fabric 30B of a third preferred embodiment of the invention. A non-light-reflective yarn 33 and a light-reflective yarn 10 of the invention are sewn onto the fabric 30B. The light-reflective yarn 10 serves as a weaving thread, is pressed by the non-light-reflective yarn 33 and fixed to a front surface of the fabric 30B. The light-reflective yarn 10 is exposed on the front surface of the fabric 30B and does not penetrate the fabric 30B. A color of the light-reflective yarn 10 can be the same as or different from a color of the fabric 30B and the non-light-reflective yarn 33.

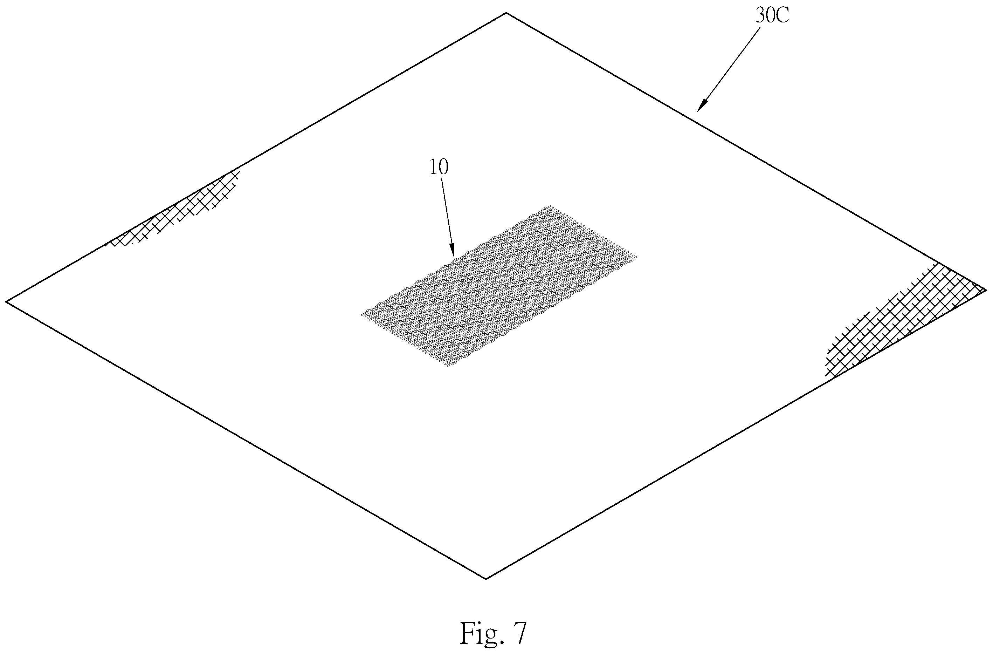

FIG. 7 is a schematic diagram of a fabric 30C of a fourth preferred embodiment of the invention. One or more light-reflective yarns 10 are used as embroidery threads and electrically-embroidered onto the fabric 30C to form various shapes or patterns, creating one or more light-reflective patterns on a surface of the fabric. A color of the light-reflective yarn 10 can be the same as or different from a color of the fabric 30C.

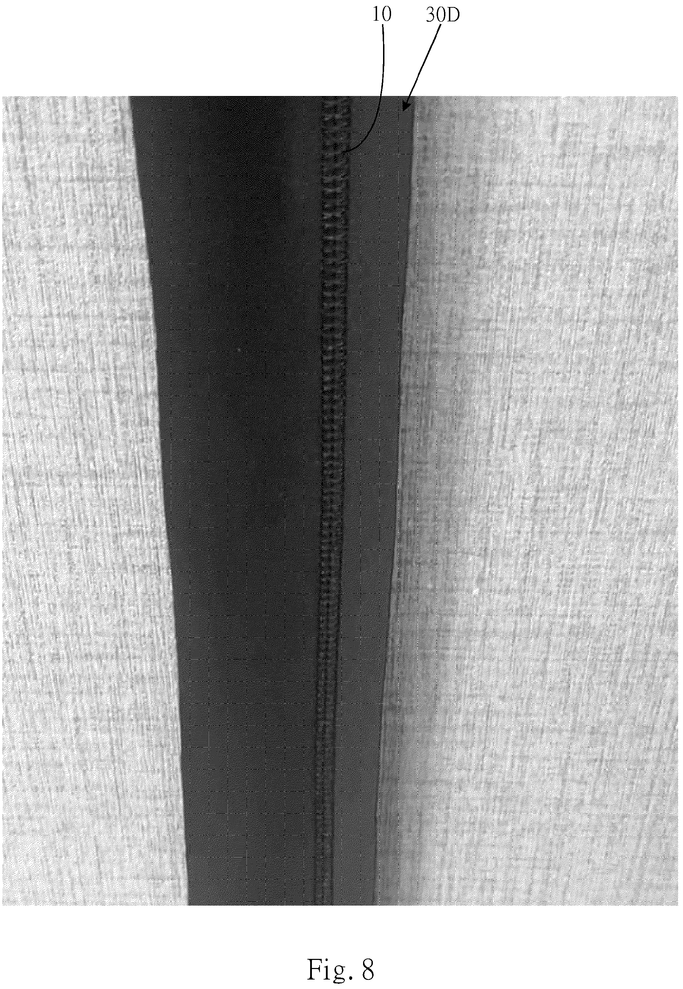

The fabric 30D shown in FIG. 8 is a photo of the fabric 30A in FIG. 5. The fabric 30D is black, and the light-reflective yarn 10 and the non-light-reflective yarn 33 are also black. Therefore, in a normal state shown in FIG. 8, the light-reflective yarn 10 and the non-light-reflective yarn 33 cannot be distinguished from each other.

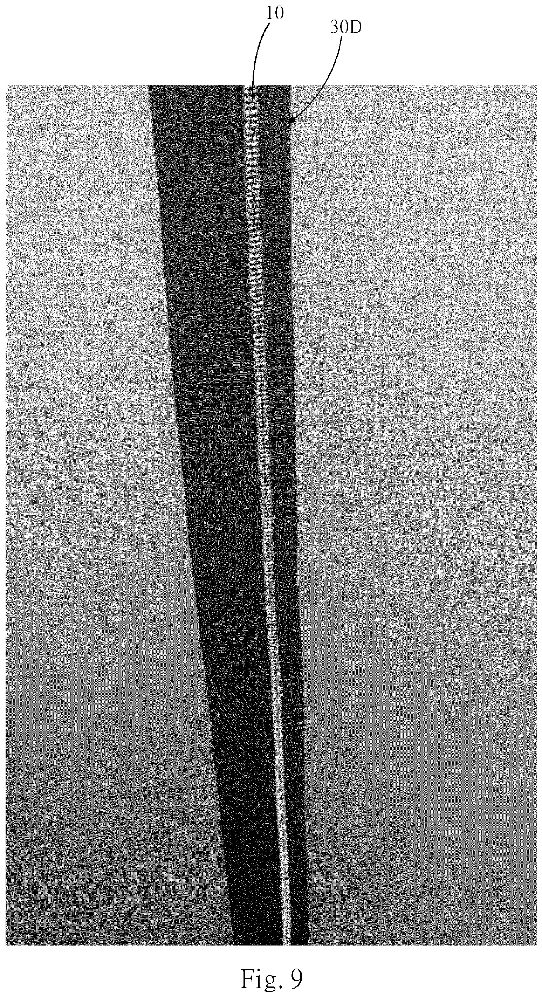

Please refer to FIG. 9. When a flashlight or vehicle headlight illuminates on the fabric 30D, the light-reflective yarn 10 on the fabric 30D reflects light, so the light-reflective yarn 10 can be distinguished, and reflection of the light-reflective yarn 10 can provide a safety warning.

The light-reflective yarn 10 of the invention can be used as a weaving thread. Various weaving techniques or methods can be used to weave the light-reflective yarn 10 and the non-light-reflective yarn 33 to become the fabric, such as cloth or woven tape. Computerized weaving techniques can also be used to weave jacquard on cloth. A jacquard pattern can be texts, symbols, or graphics. The light-reflective yarn 10 of the invention can also be used as an embroidery thread to embroider patterns on cloth. An embroidery pattern can be texts, symbols, or graphics.

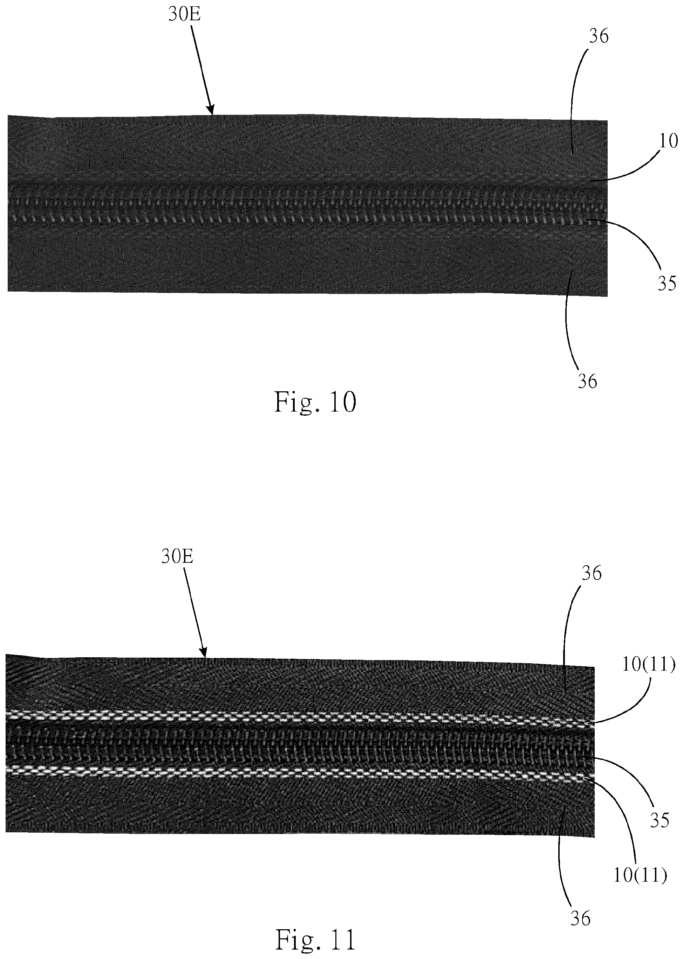

FIG. 10 is a photo of the fabric 30E of an embodiment of the invention, which is a zipper. The zipper 30E comprises two strips of cloth 36 and a plurality of teeth 35 disposed on the two strips of the cloth 36. The cloth 36 is a woven tape woven with black non-light-reflective yarns 33 (black colored yarns) and the light-reflective yarns 10 of the invention. In this embodiment, each of the two strips of the cloth 36 is woven with three light-reflective yarns 10, each of the light-reflective yarns 10 has a segment exposed on a front surface of the cloth 36. The light-reflective yarns 10 are black light-reflective yarns, with a color the same as that of the non-light-reflective yarns 33. In daylight or under normal conditions, the light-reflective yarns 10 are not discernible from an appearance of the zipper 30E. The light-reflective yarns 10 are integrated with the non-light-reflective yarns 33 of the cloth 36, hidden in the fabric 30E, making it difficult to distinguish between the light-reflective yarns 10 and the non-light-reflective yarns 33. The light-reflective yarn 10 described in this specification as "hidden" or "blended" into the fabric 30 does not mean that the light-reflective yarn is disposed in the fabric 30, but rather that it is difficult to distinguish the light-reflective yarn 10 from the non-light-reflective yarn 33 from an appearance of the fabric 30.

Please refer to FIG. 11, when light, such as from a flashlight or car headlight, illuminates on the zipper 30E, the light-reflective layer (i.e., the micro glass bead layer) and the reflective layer 18 of the light-reflective yarn 10 of the cloth 36 reflect light, providing a safety effect through reflection. At the same time, the light-reflective yarn 10 can be distinguished on the zipper 30E.

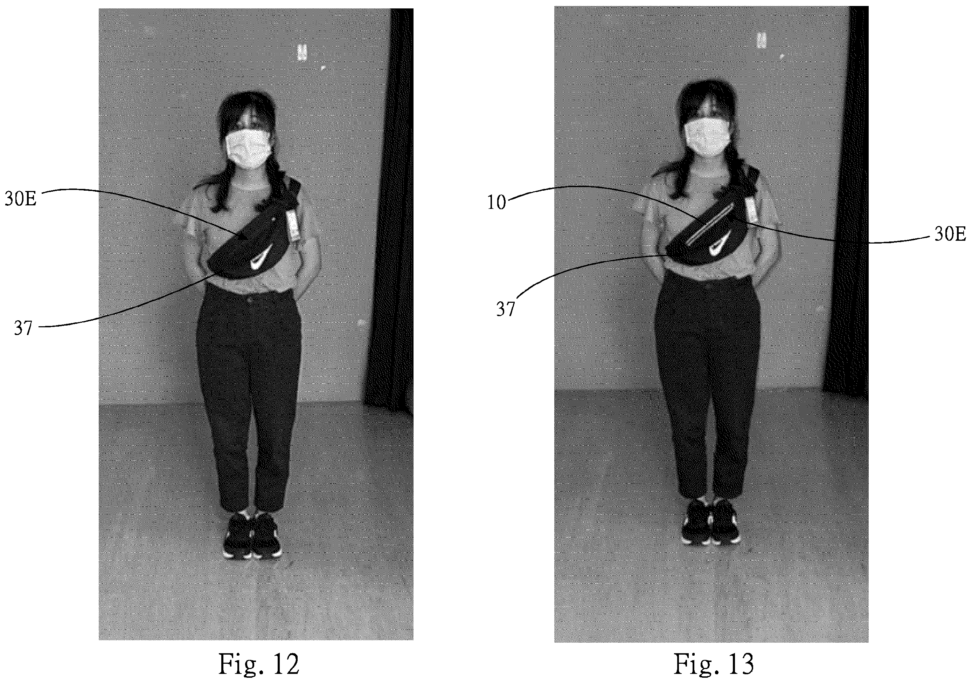

FIGS. 12 and 13 show an example of the fabric 30E of the invention being applied to an article. The zipper 30E in FIG. 12 is sewn onto a black backpack 37, which can be opened and closed using the zipper 30E. In a non-light-reflective state shown in FIG. 12, the light-reflective yarn 10 on the zipper 30E cannot be seen. However, in dim light or at night, when light illuminates on the backpack 37, as shown in FIG. 13, the light-reflective yarn 10 on the zipper 30E reflects light, providing a warning effect. The light-reflective yarn 10 can also be distinguished through a light reflected by the light-reflective yarn 10.

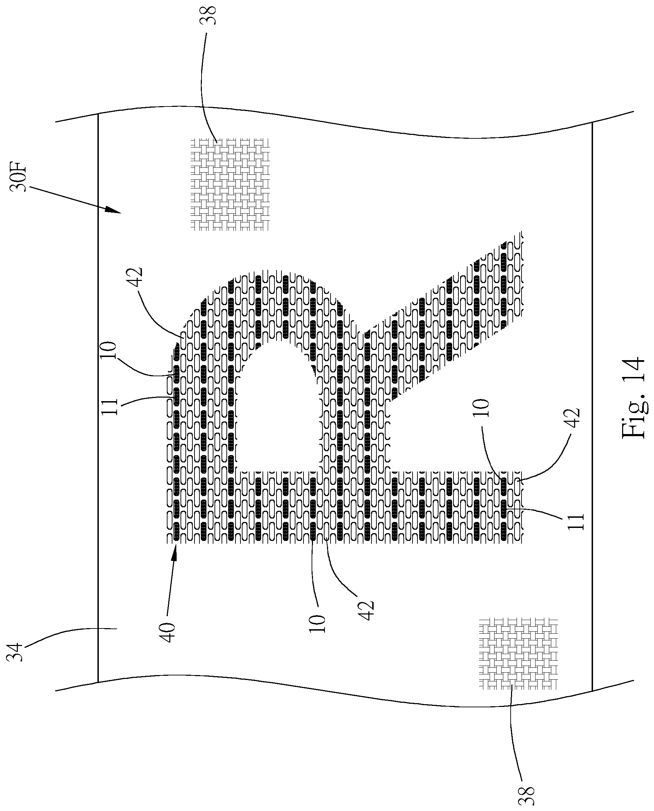

FIG. 14 is a schematic diagram of the front side 34 of a fabric 30F of a fifth preferred embodiment of the invention. It illustrates a schematic diagram showing the light-reflective yarn 10 of the invention using computerized jacquard technology to form a jacquard pattern 40 on the fabric 30F. The jacquard pattern 40 can be a decorative pattern, texts, or other styles. The jacquard pattern 40 in this embodiment is "R." Jacquard is a weaving technique that creates a pattern (decorative design) by weaving. The jacquard pattern 40 is formed by interweaving yarns in different arrangements during weaving, creating a woven pattern in a cloth. The jacquard pattern 40 can be a decorative pattern, texts, or graphics. A characteristic of jacquard is that textures on front and back of the cloth 36 are exactly opposite. It is understood that patterns can be created on both the front and back of the fabric.

The fabric 30F is woven with a plurality of non-light-reflective yarns 38, and yarns forming the jacquard pattern 40 include the light-reflective yarn 10 of the invention. The jacquard pattern 40 can be woven entirely with the light-reflective yarn 10 of the invention. In this embodiment, the jacquard pattern 40 is woven with a plurality of the light-reflective yarns 10 and a plurality of non-light-reflective yarns 42. Each of the light-reflective yarns 10 has the segments 11 that are exposed on the front side 34 of the fabric 30F. One or more non-light-reflective yarns 42 are disposed between two adjacent light-reflective yarns 10, thereby reducing a weight of the fabric 30F and a cost of using the light-reflective yarn 10. Furthermore, the light-reflective yarn 10 still provides an excellent light-reflective effect when rendered through a reflected light. When the light-reflective yarn 10 reflects light, a reflection of the complete jacquard pattern 40 is formed. FIG. 14 shows that three non-light-reflective yarns 38 are woven between two light-reflective yarns 10. The light-reflective yarn 10 and the non-light-reflective yarn 38 have a same weaving direction, but it is not limited thereto.

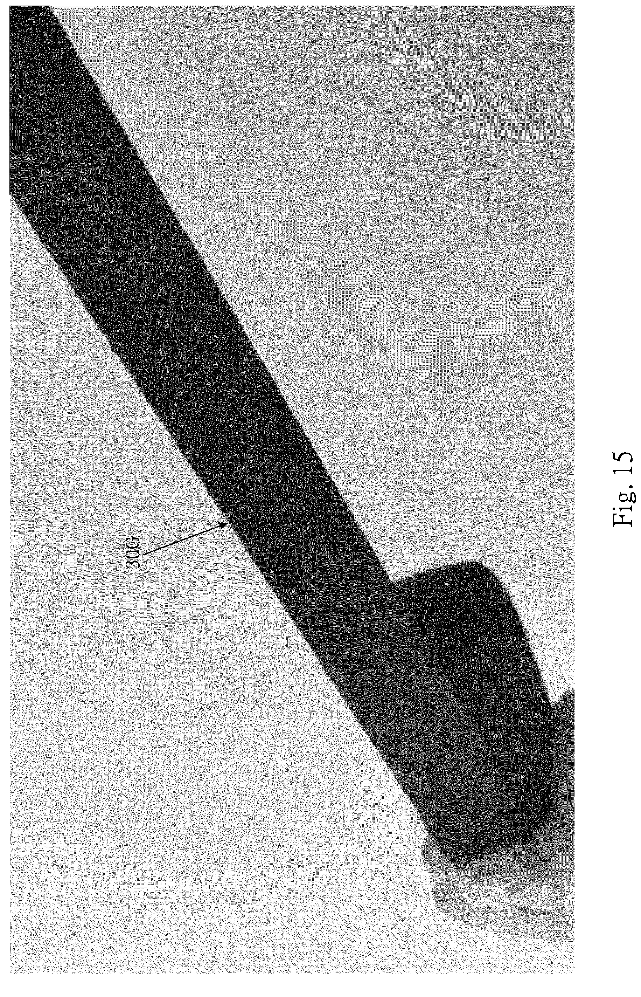

FIG. 15 is a photo of a fabric 30G of another specific embodiment of the invention. The fabric 30G is a black woven tape woven with black non-light-reflective yarns, one or more jacquard patterns, the word "SPORT", are woven on the woven tape. The jacquard pattern 50 in FIG. 15 is a single-colored jacquard woven with black light-reflective yarns 10, and the light-reflective yarns 10 are exposed on a front side of the woven tape. When not reflecting light, the light-reflective yarn 10 and the non-light-reflective yarn 38 of the woven tape 30G (as shown in FIG. 14) are both black. Therefore, in FIG. 15, the light-reflective yarn 10 and the jacquard pattern 50 cannot be seen from the woven tape 30G. The patterns 40 and 50 shown in this specification are for exemplification only rather than being limitative.

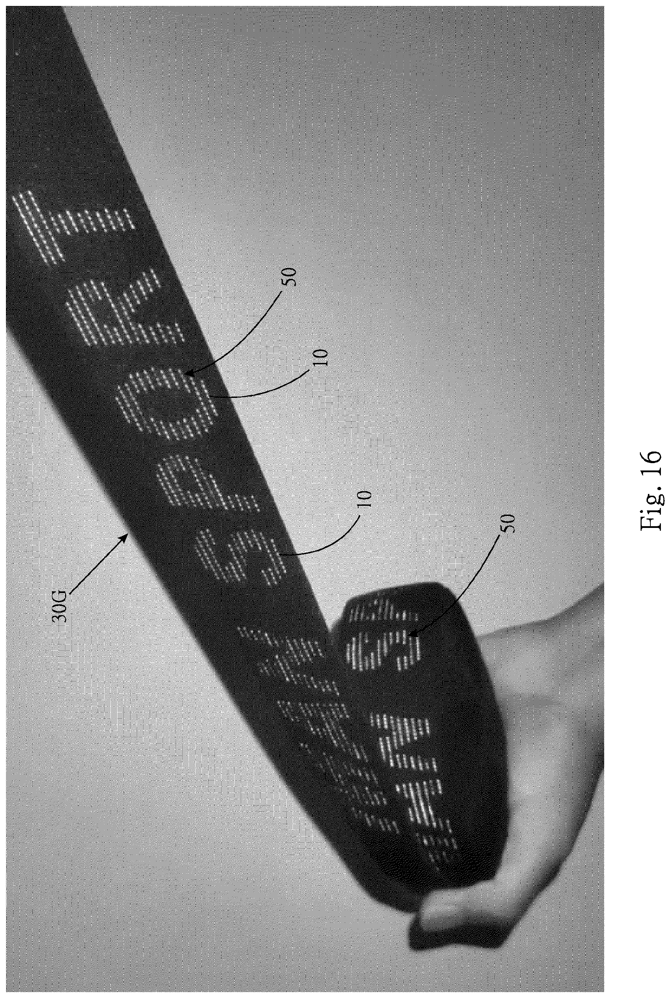

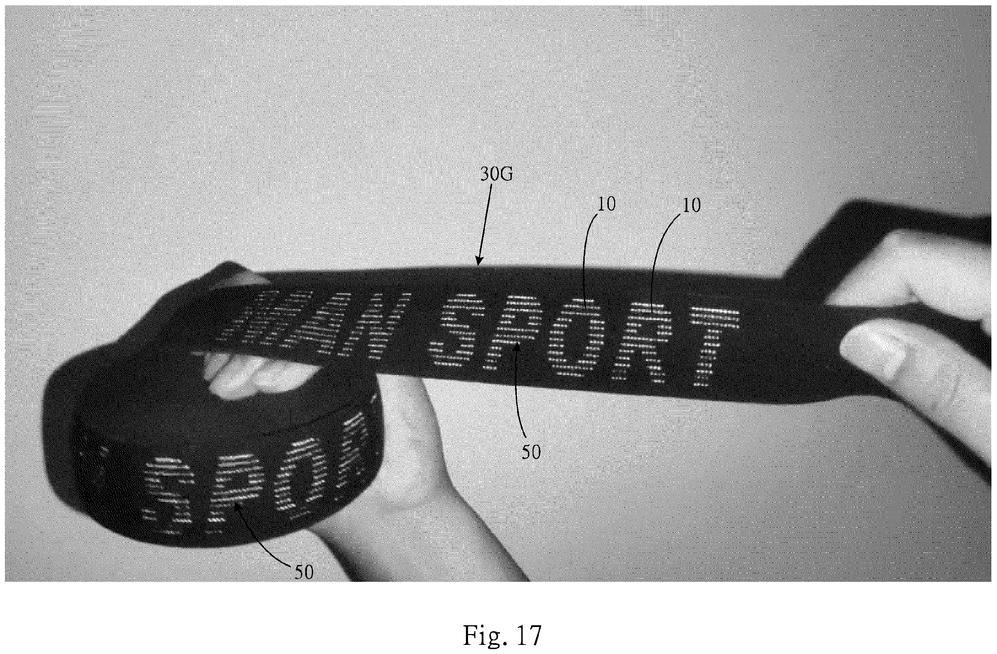

Please refer to FIGS. 16 and 17. When light from a flashlight, car headlight, or the like illuminates on the woven tape 30G, the light-reflective yarns 10 on the jacquard pattern 50 reflect light, clearly showing the jacquard pattern 50: SPORT and the light-reflective yarns 10. When reflecting light, the jacquard pattern 50 forms a light-reflective pattern.

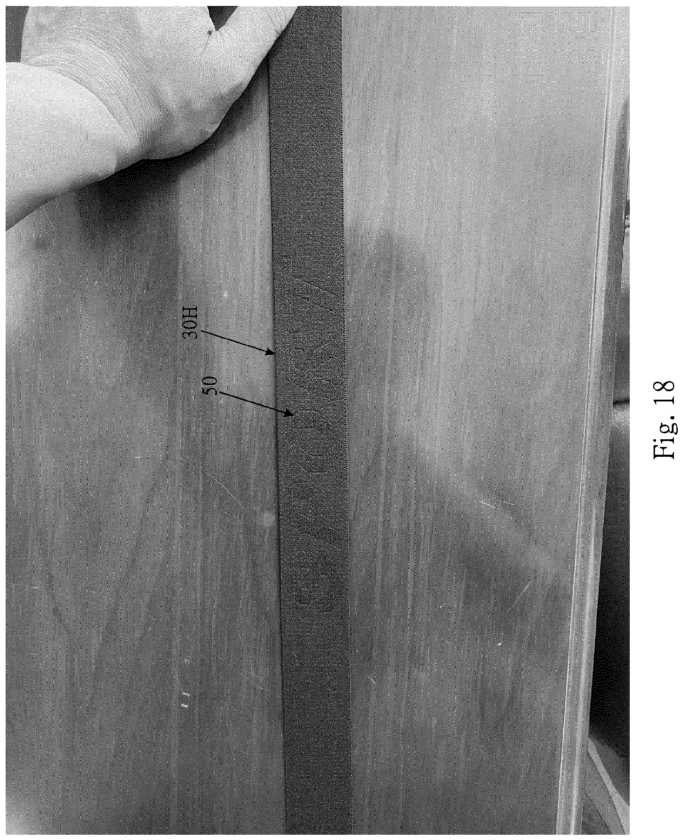

FIG. 18 shows a blue fabric (woven tape) 30H and a jacquard pattern 50: SPORT woven with the same-colored light-reflective yarns 10. The light-reflective yarn 10 and the non-light-reflective yarn woven to become the woven tape 30H are both blue. Therefore, under normal conditions, the light-reflective yarn 10 does not reflect light and has a same color as the non-light-reflective yarn of the woven tape 30H, making the light-reflective yarn 10 and the jacquard pattern 50 undiscernible.

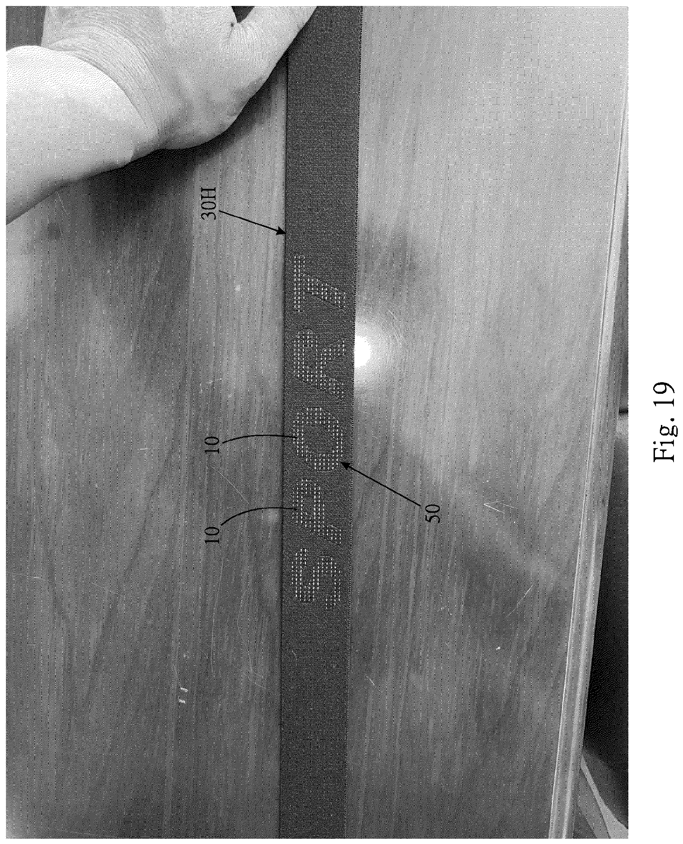

When light from a flashlight, car headlight, or the like illuminates on the woven tape 30H, as shown in the photo of FIG. 19, the light-reflective yarn 10 on the woven tape 30H reflects light, displaying the light-reflective jacquard pattern 50.

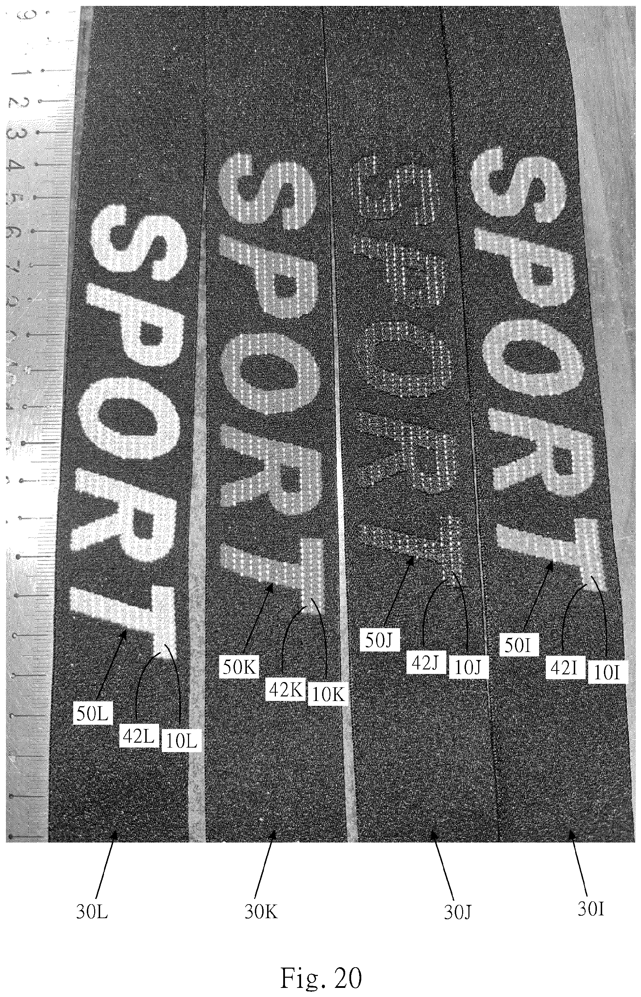

The photo of FIG. 20 shows four woven tapes 30 (30I-30L). Light illuminating on the four woven tapes 30I-30L causes the light-reflective yarns 10 (10I-10L) in the jacquard patterns 50 (50I-50L) to reflect light. Each of the four woven tapes 30 is black, woven with black non-light-reflective yarns. Each of the four jacquard patterns 50 has a different color, wherein the rightmost jacquard pattern 50I is yellow, contrasting in dark and light shades with the woven tape 30I. The jacquard pattern 50I is woven with the yellow light-reflective yarns 10I and the yellow non-light-reflective yarns 42I. When the jacquard pattern 50I is not illuminated by light, the light-reflective yarn 10I does not reflect light, and the light-reflective yarn 10I and the non-light-reflective yarn 42I of a same color cannot be distinguished. When illuminated by light, the light-reflective yarn 10I in the jacquard pattern 50I reflects light.

The jacquard pattern 50J of the second woven tape 30J on the right is woven with gray light-reflective yarns 10J and gray non-light-reflective yarns 42J. The jacquard pattern 50K of the second woven tape 30K on the left is woven with blue light-reflective yarns 10K and blue non-light-reflective yarns 42K. The jacquard pattern 50L of the leftmost woven tape 30L is woven with white light-reflective yarns 10L and white non-light-reflective yarns 42L. Similarly, when not reflecting light, the light-reflective yarns 10J, 10K, and 10L respectively blend into the jacquard patterns 50J, 50K, and 50L of a same color, making it difficult to discern the light-reflective yarns 10.

The four woven tapes 30 in FIG. 20 show that a color of the jacquard pattern 50 is different from that of the woven tape 30, while a color of the light-reflective yarn 10 is the same as that of the jacquard pattern 50. In implementation, a color of the light-reflective yarn 10 can be different from a color of the jacquard pattern 50 and a color of the woven tape 30. In this way, a multi-colored design of the woven tape 30 makes the woven tape 30 more colorful, more diverse, and more contrasting in colors, thereby enhancing an appearance aesthetically.

The colored jacquard pattern 50 of each of the woven tapes 30 shown in FIG. 20 is woven with 12 colored light-reflective yarns 10 and several colored non-light-reflective yarns 42 of a same color. Other parts of the woven tape 30 (non-jacquard patterned areas) are woven with colored yarns of a different color. Although the light-reflective yarn 10 has a color different from that of the woven tape 30, the light-reflective yarn 10 is still hidden in the fabric 30 and in the jacquard pattern 50. The jacquard pattern 50 and textures can be seen during the day, and at night, the light-reflective yarns 10 reflect light, providing safety protection.

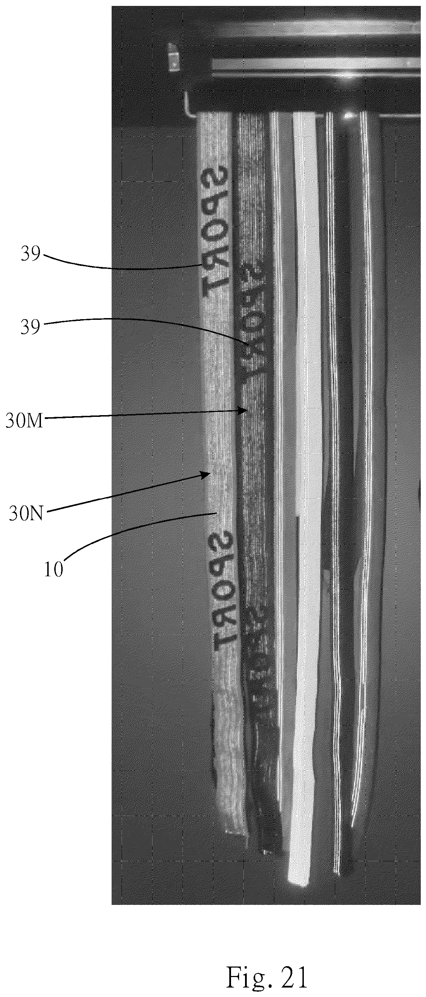

Please refer to the photo in FIG. 21, which shows back sides of several strips of the fabric 30, including back sides of the two woven tapes 30M and 30N, illuminated by light from a distance of approximately 10 meters. Because textures of the jacquard patterns 50 on the front and back sides of the fabric 30 are opposite, a back pattern (texture) 39 of the jacquard pattern 50 "SPORT" on the back sides of woven tapes 30M and 30N is non-light-reflective. In other positions, the light-reflective yarns 10 are exposed on the back sides of the woven tapes 30M and 30N and reflect light. Light-reflective and non-light-reflective forms of the woven tapes 30M and 30N shown in FIG. 21 are for example only and are not limitative.

The light-reflective yarn 10 of the invention can be manufactured in a variety of colors, not limited to silver, to complement a color of the fabric 30. The colored light-reflective yarn 10 can be blended into the fabric 30 of a same color to create a concealing effect. The colored light-reflective yarn 10 can also be incorporated into the fabric 30 of a contrasting or different color, creating a color difference or contrast between the light-reflective yarn 10 or the pattern of the light-reflective yarn 10 and the fabric 30, thereby creating a highlighting effect.

Although the invention has been disclosed as above with the embodiments, it is not intended to limit the invention. A person having ordinary skill in the art to which the invention pertains can make various changes and modifications without departing from the spirit and scope of the invention. Therefore, the scope of protection of the invention shall be subject to what is defined in the pending claims.

## Claims

1. A fabric with light-reflective yarn, comprising:
a fabric with one or more non-light-reflective yarns incapable of reflecting light, the fabric having at least one color; and
one light-reflective yarn or light-reflective yarns bonded to the fabric by weaving, sewing, machine sewing, embroidery, or jacquard, and exposed on at least one surface of the fabric; the light-reflective yarn being made in any color other than silver, a color of the light-reflective yarn being the same as, different from, or contrasting with a color of the fabric.

2. The fabric as claimed in claim 1, wherein the light-reflective yarn has a covering layer covering the light-reflective yarn, the covering layer is made of a resin material, is light-transmissive, and has a color.

3. A fabric with light-reflective yarn, comprising:
a fabric with one or more non-light-reflective yarn incapable of reflecting light, the fabric having at least one color; and
one light-reflective yarn or light-reflective yarns bonded to the fabric by weaving, sewing, machine sewing, embroidery, or jacquard, and exposed on at least one surface of the fabric;
the light-reflective yarn having a covering layer, the covering layer made of a resin material and being light-transmissive and having a color, the covering layer covering the light-reflective yarn, the light-reflective yarn being made in any color, a color of the light-reflective yarn being the same as, different from, or contrasting with a color of the fabric.

4. The fabric as claimed in claim 1, 2 or3, wherein the light-reflective yarn forms at least one pattern on the at least one surface of the fabric.

5. The fabric as claimed in claim 4, wherein the pattern is formed by several the light-reflective yarns and several the non-light-reflective yarns, with one or more the non-light-reflective yarns provided between two of the adjacent light-reflective yarns.

6. The fabric as claimed in claim 5, wherein the light-reflective yarn and the non-light-reflective yarn forming the pattern have a same color or different colors.

7. The fabric as claimed in claim 1, 2 or 3, wherein the at least one surface of the fabric is formed with at least one pattern, the pattern is formed by the light-reflective yarn and the non-light-reflective yarn of a same color, and a color of the pattern is different from a color of the fabric.

8. The fabric as claimed in claim 2 or 3, wherein the covering layer is a resin containing silane.

9. The fabric as claimed in claim 2 or 3, wherein the resin of the covering layer is added with a transparent pigment.

10. The fabric as claimed in claim 2 or 3, wherein the light-reflective yarn comprises a base layer having two surfaces; at least one layer of light-reflective elements disposed on at least one surface of the base layer; and the covering layer covering the base layer and the light-reflective elements.
